Europäisches Patentamt

European Patent Office

Office européen des brevets

(11) Numéro de publication: **0 413 640 A1**

## (12) DEMANDE DE BREVET EUROPEEN

(21) Numéro de dépôt: **90402310.8**

(51) Int. Cl.5: **G01W 1/02**

(22) Date de dépôt: **17.08.90**

(30) Priorité: **18.08.89 FR 8911049**

(43) Date de publication de la demande:
**20.02.91 Bulletin 91/08**

(84) Etats contractants désignés:
**AT BE CH DE DK ES FR GB GR IT LI LU NL SE**

(71) Demandeur: **I.F.M.E. FLAMBEAU SARL**
**Avenue Léon Heid**
**F-64320 Bizanos(FR)**

Demandeur: **CAMPTORT TECHNOLOGIE SARL**

**Avenue Léon Heid**
**F-64320 Bizanos(FR)**

(72) Inventeur: **Pateras Pescara de Castelluccio,**
**Christian**
**16, rue Michel Hounau**
**F-64000 Pau(FR)**

(74) Mandataire: **Ravina, Bernard**
**RAVINA S.A. 24, boulevard Riquet**
**F-31000 Toulouse(FR)**

(54) **Installation de mesures et de calculs de paramètres micrométéorologiques et bioclimatologiques.**

(57) L'installation selon la présente invention comporte au moins un anémomètre (1), au moins une girouette (2), au moins un capteur solaire (3), au moins un psychromètre, au moins un fluxmètre (5) un pluviomètre (6), des sondes de températures du sol et de l'air, une unité de commandes et de calculs et une unité de gestion et de stockage des valeurs calculées.

Cette installation se caractérise essentiellement en ce qu'elle comporte un caisson (9) dans lequel est disposé au moins un psychromètre et au moins un dispositif de conduite d'air extérieur vers au moins un psychromètre.

fig 1

EP 0 413 640 A1

La présente invention a pour objet une installation de mesures et de calculs de paramètres micrométéorologiques et bioclimatologiques.

L'installation selon l'invention a pour but d'établir, à partir de mesures micrométéorologiques, un bilan d'échanges énergétiques hydriques et en gaz carbonique entre l'atmosphère, le sol et un couvert végétal et plus particulièrement de calculer l'évapotranspiration réelle.

De telles installations sont connues de l'art antérieur et comportent différents capteurs tels que anémomètres, girouettes, capteurs solaires psychromètres, thermosondes, fluxmètres, pluviomètres et sondes de températures du sol, de la surface du sol et de l'air.

De plus, ces installations sont équipées d'une unité électronique de calculs et de commandes et d'une unité de stockage et de gestion des valeurs calculées, ces deux unités étant disposées dans un coffret protecteur disposé à proximité du portique.

Sur le portique des installations connues, est monté un chariot mobile sur lequel sont fixés à au moins deux niveaux différents des psychromètres mesurant le degré hygrométrique de l'air. A chaque niveau de mesure est monté au moins un psychromètre, ce qui entraîne une augmentation du coût de telles installations . De plus, ces psychromètres sont disposés à l'extérieur et sont donc soumis aux intempéries et au rayonnement solaire direct, ce qui peut entraîner des erreurs de mesures mais surtout, leur détérioration à la longue.

Les installations connues présentent donc plusieurs éléments séparés : le portique, un mât portant un bilanmètre,le caisson contenant les unités de calculs, de commandes, de stockage et de gestion, le pluviomètre et les différentes sondes. L'ensemble de ces éléments reliés par des câbles et fils, présente un encombrement important et est de mise en place longue.

La présente invention a pour but d'obvier aux inconvénients ci-dessus énoncés en proposant une installation de faible encombrement, et de mise en place aisée, et offrant une bonne protection de certains de ces éléments ne devant pas forcément être au contact direct avec l'extérieur pour délivrer des mesures ou autres.

A cet effet, l'installation de mesures et de calculs de paramètres micrométéorologiques et bioclimatiques comporte au moins un anémomètre, au moins une girouette, au moins un capteur solaire, au moins un psychrommètre, au moins un fluxmètre, au moins un pluviomètre, des sondes de température du sol, de la surface du sol et de l'air, une unité de commandes et de calculs et une unité de gestion et de stockage des valeurs calculées et se caractérise essentiellemnt en ce qu'elle comporte un caisson dans lequel est disposé au moins un psychromètre et au moins un dispositif de conduite d'air extérieur vers le psychromètre.

Selon une autre caractéristique de l'invention, le dispositif de conduite d'air extérieur est doté de deux entrées d'air extérieures décalées en hauteur.

Selon encore une autre caractéristique, le dispositif de conduite d'air extérieur est disposé en sortie du caisson dans une enveloppe dans laquelle est créée une circulation d'air.

D'autres avantages et caractéristiques apparaîtront dans la description de l'invention illustrée aux dessins annexés donnés à titre d'exemple non limitatif et en lesquels :

     * La figure 1 est une vue en perspective d'ensemble de l'installation selon l'invention,

     * La figure 2 est une vue en coupe longitudinale médiane de l'installation selon une première forme de réalisation,

     * La figure 3 est une vue en coupe partielle de l'installation selon une seconde forme de réalisation.

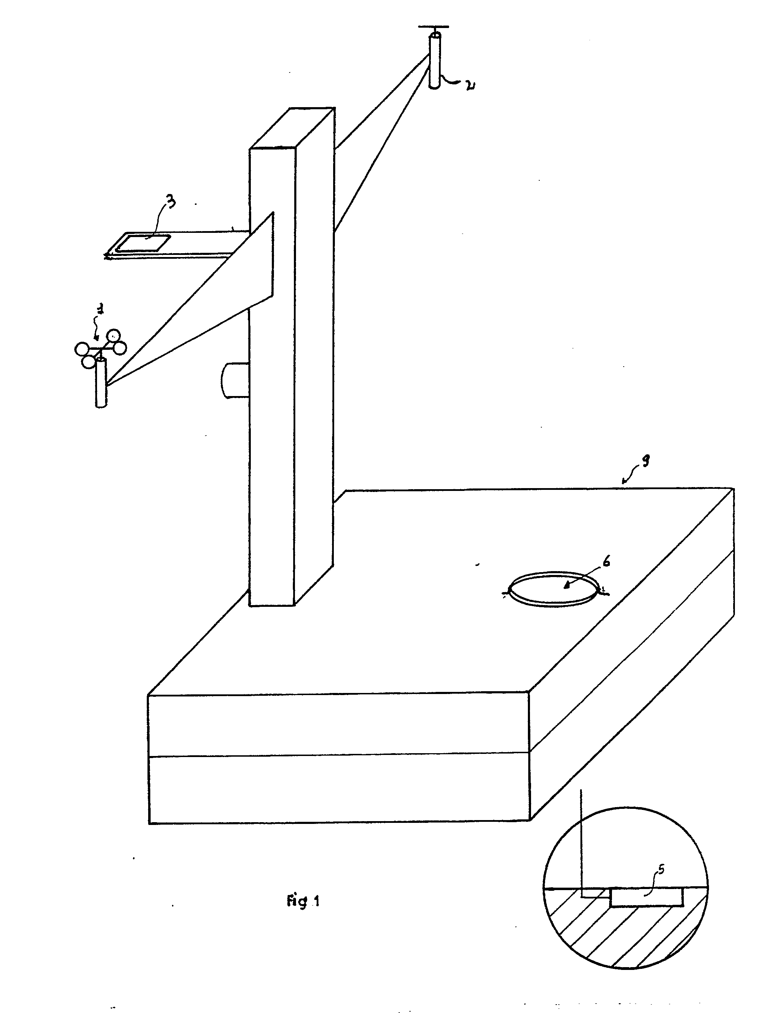

Telle que représentée en figure 1, l'installation selon l'invention comporte de façon connue au moins un anémomètre 1, au moins une girouette 2, au moins un capteur solaire 3, au moins un psychromètre 4, au moins un fluxmètre 5, un pluviomètre 6, et des sondes de température du sol, de la surface du sol et de l'air (non représentées).
De plus, cette installation comporte une unité 7 de commandes des différents capteurs ci-dessus énoncés et de calculs des données relevées par ces capteurs et une unité 8 de stockage et de gestion des valeurs calculées par l'unité 7 de commandes et de calculs.

L'installation selon l'invention comporte un caisson 9 constitué d'un bac inférieur 10 et d'un chapeau 11 venant recouvrir le bac et un mât 12 solidaire du caisson 9 et disposé sensiblement verticalement. Sur le mât 12 sont montés par l'intermédiaire de bras 13 fixés de part et d'autre du dit mât le ou les anémomètres 1, la ou les girouettes 2, le ou les capteurs solaires 3 et une ou des sondes de température de l'air. Dans le caisson 3 est disposé au moins un psychromètre 4 et l'installation est dotée d'au moins un dispositif 13 de conduite d'air extérieur vers au moins psychromètre 4. Dans le caisson 9 sont également montées les unités 7 de commandes et de calculs et de stockage et de gestion des valeurs calculées.

L'installation comporte de préférence un seul pluviomètre 6 qui est également monté sur le caisson 9 avec son dispositif de mesure disposé à l'intérieur du dit caisson.
Avantageusement, le pluviomètre est associé avec un ensemble d'analyse de l'eau de pluie également disposé dans le caisson 9.

Le dit caisson est formé d'un bac inférieur 10 reposant en écartement du sol sur des pieds 14. Ce bac inférieur 10 présente un fond 10 A et des parois 10 B perpendiculaires au fond 10 A et parallèles deux à deux.

Le chapeau 11 du caisson 9 présente une paroi supérieure 11A plane destinée à venir se placer parallèlement au dessus du fond 10A du bac inférieur 10 et des parois latérales 11B parallèles deux à deux et perpendiculaires à la paroi supérieure 11A. Les parois latérales 11B du chapeau 11 viennent recouvrir extérieurement en partie les parois latérales 10B du bac inférieur 10.

Les parois latérales 11B sont dotées chacune d'un épaulement 11G contre lequel viennent en contact les bords supérieurs des parois latérales 10B du bac 10 correspondantes.

Le caisson est réalisé en une matière résistant à la corrosion et aux rayonnements solaires telle que la matière connue sous le nom commercial de "ABS".

Entre le chapeau 11 et le bac inférieur 10 est défini un volume dans lequel sont disposés les éléments ci-dessus évoqués.

L'unité 7 de commandes et de calculs et l'unité 8 de stockage et de gestion des valeurs calculées sont fixées sur le fond 10A du bac inférieur 10 et en espacement du dit fond.

Sur la paroi supérieure 11 A du chapeau 11 est ménagé un orifice destiné à recevoir le cône du pluviomètre 6.

Au droit de cet orifice et sur le fond 10A du bac inférieur 10 est fixé le dispositif de mesure 6A de la pluviométrie constitué de façon connue par un godet basculant. Ce dispositif de mesure 6A du pluviomètre 6 est fixé en espacement du fond 10A. Selon une variante, ce dispositif de mesure 6A peut être fixé sur une paroi latérale 10B du bac 10. Au dispositif de mesure 6A peut être associé un dispositif d'analyse chimique de l'eau de pluie.

Le fond 10A du bac inférieur 10 est doté longitudinalement en partie médiane d'un canal 15 réalisé par un enfoncement du fond 11A et présente au moins une pente.

Préférentiellement, le canal 15 présente deux pentes convergentes l'une vers l'autre et est doté d'un orifice 16 dans la zone de la ligne de convergence de ses pentes. De part et d'autre du canal 15 les surfaces du fond 10A convergent vers le dit canal. La forme du fond 10A du bac 10 permet la récupération des eaux dans le canal 15 et leur évacuation par l'orifice 16. Dans le caisson 9 de l'installation selon l'invention est monté un psychromètre 4 destiné à mesurer le degré d'hygronométrie de l'air extérieur et un dispositif 13 de conduite d'air extérieur vers le dit psychromètre.

Le psychromètre 4 est de type connu et est doté de son ventilateur d'aspiration d'air 4A. Ce psychromètre est fixé dans le caisson 9 au dessus des unités 7 et 8.

Le psychromètre 4 sur sa partie postérieure est poursuivi par un tuyau souple 17 rejetant l'air aspiré vers l'extérieur du caisson 9 en passant par l'orifice 16 du bac inférieur 10.

La partie avant du psychromètre 4 est connectée au dispositif 13 de conduite d'air extérieur.

Ce dispositif 13 de conduite d'air est constitué par un tube 18 doté d'au moins une entrée 19 disposée à l'extérieur.

Le dispositif 13 de conduite d'air de l'installation selon l'invention est pourvu d'au moins deux entrées d'air 19 disposées à l'extérieur de façon décalée en hauteur en sorte d'obtenir une prise d'air extérieur à deux niveaux différents pour effectuer une mesure différentielle de températures sèche et humide par le psychromètre 4.

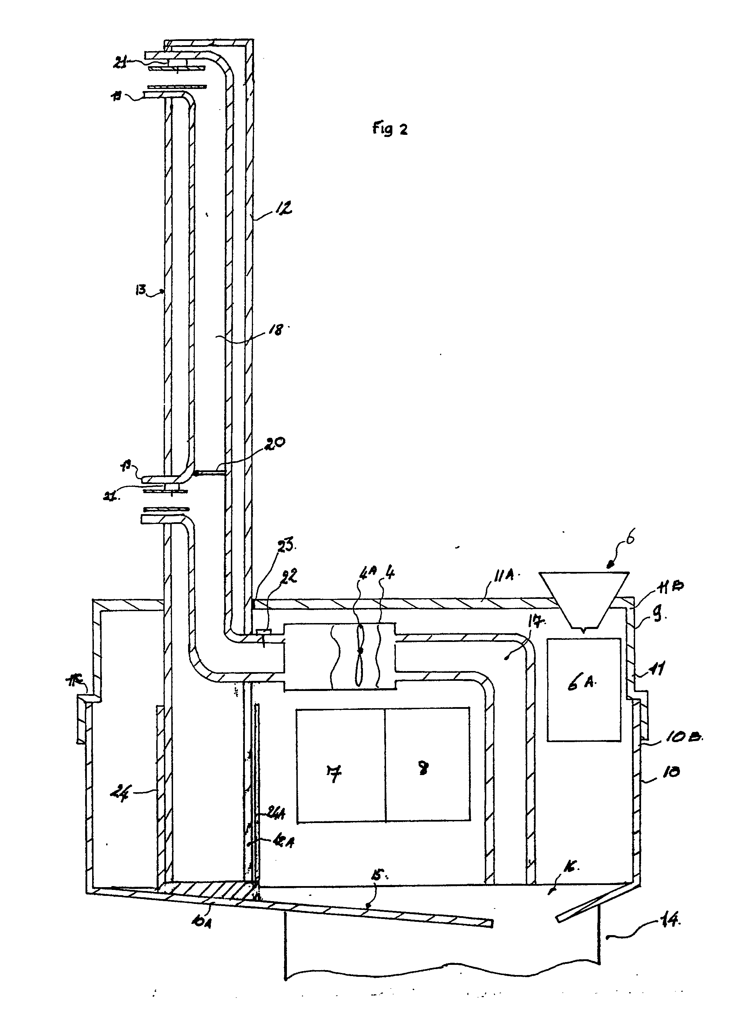

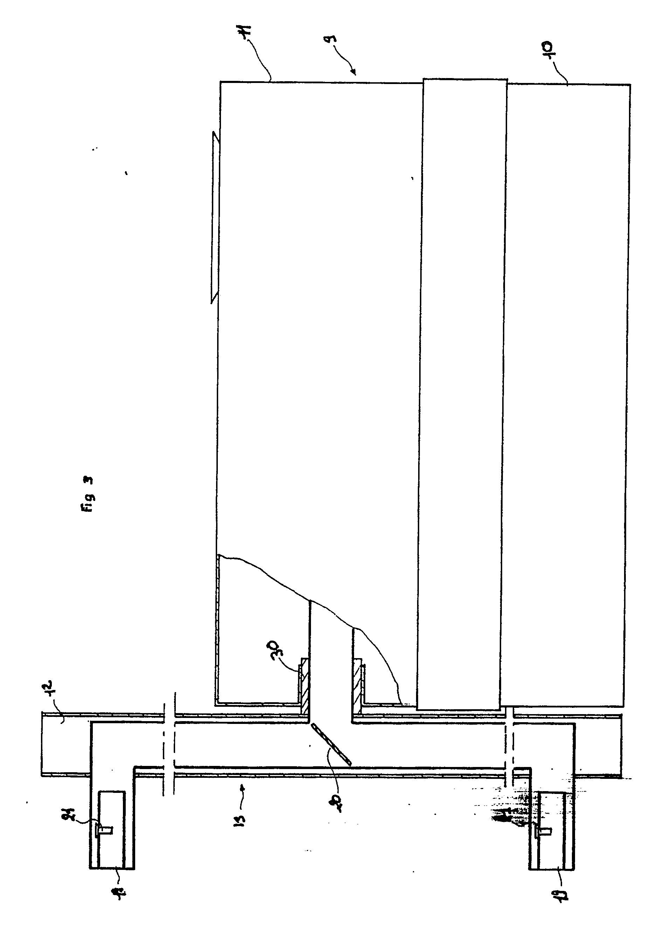

Tel que représenté aux figures 2 et 3, le dispositif d'amenée d'air présente deux entrées d'air 19.

Le tube 18 formant le dispositif 13 de conduite d'air est connecté à l'intérieur du caisson 9 à la partie avant du psychromètre 4 disposé horizontalement dans le dit caisson.

Selon une première forme de réalisation représentée en figure 2, le tube 18 débouche du caisson 9 perpendiculairement à la paroi supérieure 11A du chapeau et forme un coude entre le psychromètre et sa sortie du caisson 9.

L'extrémité supérieure du tube 18 est coudée en sorte d'être disposée sensiblement horizontalement et constitue une première entrée d'air 19. Entre l'extrémité du tube 18 et le caisson 9 est formée une seconde entrée d'air 19 parallèle à la première et disposée de préférence sur une même génératrice que la dite première entrée d'air.

Cette seconde entrée d'air 19 peut être réalisée par un manchon raccordé au tube 18 qui est doté d'un orifice à cet effet.

Le dispositif 13 de conduite d'air vers le psychromètre est pourvu à l'intérieur du tube 18 d'un volet basculant 20 disposé au niveau de la seconde entrée d'air 19 et destiné à obturer de façon alternative le passage de l'air provenant de la première entrée d'air 19 et à permettre le passage de l'air provenant de la seconde entrée d'air 19 et vice versa.

Ce volet basculant 20 peut être actionné par un électro-aimant dont le relai est commandé suivant une fréquence déterminée par l'unité de commande 7.

Selon un seconde forme de réalisation représentée en figure 3, le tube 18 du dispositif de conduite d'air vers le psychromètre débouche à l'extérieur du caisson 9 horizontalement et perpendiculairement à une paroi 11A du chapeau 11 du caisson 9.

Le tube 18 selon cette forme de réalisation se divise en sortie du caisson en deux branches coaxiales disposées verticalement et en extrémité desquelles sont formées la première et seconde entrées d'air 19.

Dans le tube 18 est monté un volet basculant 20 au niveau de la division du dit tube en deux branches. Ce volet est commandé alternativement pour effectuer la prise d'air soit sur la première entrée, soit sur la seconde entrée.

Selon cette forme de réalisation, les entrées d'air 19 du tube 18 sont disposées horizontalement en sorte de recevoir directement un flux d'air extérieur.

Le dispositif 13 d'amenée d'air vers le psychromètre 4 est doté sur chacune de ses entrées 19 d'une sonde de température 21 et est doté d'une autre sonde de température 22 à l'entrée du psychromètre 4.

Un différentiel de températures sèche et humide est établi entre les deux entrées d'air 19 par les sondes 21.

La sonde 22 à l'entrée du psychromètre 4 permet de vérifier la température de l'air par rapport à celle prélevée à l'entrée 19 par laquelle l'air est amené et d'effectuer des corrections.

En fonction du différentiel des températures établi, le psychromètre 4 détermine une température humide de l'air au niveau de l'entrée 19 par laquelle l'air est prélevé.

Cette température humide est mesurée alternativement pour l'une et l'autre entrée 19 en fonction de la position au volet basculant 20.

Le dispositif 13 de conduite d'air vers le psychromètre sort du caisson 9 pour être en contact direct avec l'extérieur et subir entre autres, le rayonnement direct et donc des variations de température.

Le contact de l'air avec ce dispositif 13 peut entraîner un phénomène de condensation, ce qui est tout à fait indésirable du fait que cet air doit être amené vers le psychromètre qui mesure le degré hygronométrique.

On comprendra donc que la condensation dans le dispositif 13 fausse les mesures effectuées par le psychromètre 4.

Dans le but d'éviter la condensation de l'air dans le dispositif 13 de conduite, ce dernier est disposé à sa sortie du caisson 9 à l'intérieur d'une enveloppe dans laquelle est créée une circulation d'air.

L'enveloppe permet de protéger le dispositif 13 de conduite d'air du rayonnement direct et l'air en circulation dans l'enveloppe et au contact du dispositif 13 de conduite est à la température de l'air extérieur.

De la sorte, aucun phénomène de condensation n'est créé dans le dispositif 13 de conduite d'air vers le psychromètre.

L'enveloppe de protection est constituée préférentiellement par le mât 12 de l'installation qui présente une dimension suffisante pour former autour du dispositif 13 une circulation d'air.

Selon la première forme de réalisation représentée aux figures 1 et 2 du dispositif 13 de conduite d'air vers le psychromètre 4 de l'installation selon l'invention, le mât 12 est monté à sa base à l'intérieur du caisson 9 et débouche de ce dernier en passant par une ouverture 23 ménagée dans la paroi supérieure 11A du chapeau 11.

Le bac inférieur 10 du caisson 9 est pourvu d'un fourreau 24 fixé sur le fond 10A et en regard duquel vient se placer l'ouverture 23 du chapeau 11.

Le mât 12 est introduit par l'ouverture 23 et est guidé dans le fourreau 24 pour reposer sur le fond du dit fourreau.

Le chapeau 11 peut coulisser le long du mât 12 lequel peut avantageusement être bloqué en position dans le fourreau 24 par tous moyens connus tels que vis de pression.

A l'intérieur du mât 12 est monté le tube 18 du dispositif 13 d'amenée d'air vers le psychromètre 4.

A cet effet, le mât 12 comporte sur une de ses faces destinée à être placée à l'extérieur du caisson 9 des orifices en regard desquels sont placées les entrées d'air 19.

Le tube 18 est fixé à l'intérieur du mât au niveau des entrées d'air 19.

Ces entrées d'air sont formées préférentiellement par un manchon rapporté se fixant de l'extérieur du mât sur le tube 18.

Le dit tube sur son extrémité est doté d'un coude se fixant sur la face intérieure du mât par exemple par l'intermédiaire d'une douille de vissage.

Le manchon formant l'entrée d'air 19 est monté sur le tube 18 par emmanchement dans l'extrémité coudée de celui-ci. Ce manchon est préférentiellement amovible.

Pour la seconde entrée d'air 19, le tube est doté d'un T dont la jambe est fixée sur la face intérieure du mât 12 et reçoit de l'extérieur, par emmanchement, un manchon constituant la seconde entrée d'air 19.

L'extrémité du tube se connectant à l'entrée du psychromètre 4 peut être fixée de façon identique à son autre extrémité.

La partie avant du psychromètre est dotée d'une douille coulissante s'emmanchant sur le tube 18 fixé à l'intérieur du mât 12. Afin d'obtenir la circulation d'air à l'intérieur du mât 12, le fourreau 24 du caisson 9 présente une ouverture 24A et le mât 12 est doté d'une lumière 12A se plaçant en regard de l'ouverture 24A du fourreau 24.

La circulation d'air se fait de façon naturelle dans le mât 12. La prise d'air extérieur est formée par l'orifice 16 du fond 10A du bac inférieur 10 et la sortie d'air sur le mât est formée par l'extrémité ouverte du dit mât ou par des fentes réalisées en l'extrémité de ses parois.

Ainsi, dans le mât circule un air prélevé à l'extérieur qui permet d'éviter la condensation dans le tube 18.

Cette circulation naturelle d'air permet également de réaliser une ventilation de l'intérieur du caisson 9.

Le mât 12 est préférentiellement de section transversale rectangulaire et le fourreau 24 de même section que le mât est doté d'élément de positionnement du mât 12 en sorte que la connexion du psychromètre 4 et du tube 18 soit réalisée.

Selon la seconde forme de réalisation représentée en figure 3 suivant laquelle le dispositif de conduite d'air 13 débouche latéralement du caisson 9, le mât 12 est monté latéralement au dit caisson et s'étend de façon verticale. A l'intérieur du mât 12, le tube 18 est fixé par l'intermédiaire de ces entrées d'air 19.

selon cette forme de réalisation, le mât est doté en partie médiane d'une de ses parois d'une bouche de connexion 30 à une paroi du caisson 9.

Préférentiellement la bouche de connexion 30 est de section rectangulaire et vient se bloquer en position dans une ouverture 31 ménagée sur une paroi 11B du bac supérieur 11.

Cette bouche 30 est placée en regard du psychromètre 4 et contient le tube 18 se connectant au dit psychromètre.

Le dit tube est préférentiellement entretoisé dans la bouche 30 du mât 12.

Cette bouche 30 est donc ouverte et constitue l'entrée à l'intérieur du mât de la circulation naturelle d'air.

Aux extrémités du mât 12 sont formées des fentes d'échappement de l'air circulant à l'intérieur du mât.

Selon les deux formes de réalisation du dispositif 13 de conduite d'air les entrées 19 présentent une double paroi.

Sur la paroi intérieure de chaque entrée d'air est fixée la sonde de température 21.

Cette formation en double paroi permet de protéger du soleil la paroi sur laquelle est fixée la sonde de température 21.

Comme dit précédemment, sur le mât 12 sont fixés différents éléments de mesure.

Les cables et fils de ces éléments sont placés à l'intérieur du mât pour être amenés vers l'unité de commandes et de calculs.

L'installation selon l'invention permet à partir d'un seul psychromètre d'effectuer une mesure différentielle des températures sèche et humide en vue de calculer l'évapotranspiration réelle du couvert végétal sur lequel est placée la dite installation.

De plus cette installation permet de protéger certains éléments de l'ambiance extérieure et est d'un encombrement réduit et d'une mise en place aisée et rapide.

Il est à noter que l'installation telle que décrite peut être équipée d'un capteur de mesure de la pression atmosphérique ce qui permet la prise en compte de cette valeur de pression pour les calculs de l'évapotranspiration, de l'humidité et du déficit de saturation.

Ce capteur sera situé dans le caisson et sera en communication avec l'extérieur du caisson par un tuyau passant au travers de l'orifice 16.

En outre, en amont du psychromètre peut être disposée une cartouche filtrante interchangeable en une matière suffisamment poreuse pour permettre un débit correct d'air au travers du psychromètre et suffisamment dense pour retenir les impuretés qui pourront par la suite être analysées pour déterminer le degré et la nature de la pollution atmosphérique.

Le débit d'air au travers du psychromètre pourra être controlé par un dispositif de mesure approprié.

On a précédemment décrit une installation dotée d'un seul pluviomètre mais selon une variante, cette installation pourra être pourvue de deux pluviomètres de calibres différents.

De plus, la surface supérieure du caisson dans laquelle débouche l'entonnoir du pluviomètre ainsi que son épaisseur pourront être calculées en sorte que l'eau de pluie qui vient frapper cette surface puisse par rebondissement être introduite en partie ou en totalité dans l'entonnoir. Cette disposition permet de compenser le manque de précision du pluviomètre en cas de forte pluie, ce manque de précision pouvant résulter d'une trop faible vitesse de basculement des augets.

La présente invention peut recevoir tous aménagements et toutes variantes dans le domaine des équivalents techniques sans pour autant sortir du cadre du présent brevet.

**Revendications**

1. Installation de mesures et de calculs de paramètres micrométéorologiques et bioclimatologiques comportant au moins un anémomètre (1), au moins une girouette (2), au moins un capteur solaire (3), au moins un psychromètre (4), au moins un fluxmètre (5), un pluviomètre (6), des sondes de température du sol et de l'air, une unité (7) de commandes et de calculs, et une unité (8) de gestion et de stockage des valeurs calculées, installation caractérisée en ce qu'elle comporte un caisson (9) dans lequel est disposé au moins un psychromètre (4) et au moins un dispositif (13) de conduite d'air extérieur vers au moins un psychromètre (4).

2. Installation selon la revendication 1 dotée d'un psychromètre (4) et d'un dispositif (13) de conduite d'air, caractérisée en ce que le dispositif (13) de conduite d'air vers le psychromètre est constitué d'un tube (18) doté d'au moins une entrée d'air (19) disposée à l'extérieur.

3. Installation selon la revendication 1 est caractérisée en ce que le dispositif (13) de conduite d'air extérieur est dotée de deux entrées d'air (19) disposées à l'extérieur de façon décalée en hauteur, en sorte d'obtenir une prise d'air extérieur à deux niveaux différents pour effectuer une mesure différentielle de la température sèche et humide par le psychromètre (4).

4. Installation selon la revendication 3 caractérisée en ce que le tube (18) est pourvu d'un volet basculant (20) destiné à obturer de façon alternative soit l'une, soit l'autre entrée d'air extérieur (19).

5. Installation selon les revendications 2, 3 et 4 caractérisée en ce que chacunes des entrées d'air extérieur (19) est dotée d'une sonde de température (21) et l'entrée du psychromètre (4) est pourvue d'une sonde de température (22).

6. Installation selon les revendications 1, 2 et 3 caractérisée en ce que le dispositif (13) de conduite d'air extérieur vers le psychromètre (4) est disposé à sa sortie du caisson (9) à l'intérieur d'une enveloppe dans laquelle est créée une circulation d'air.

7. Installation selon la revendication 6 dotée d'un mât (12) portant au moins un anémomètre (1), au moins une girouette (2), au moins un capteur solaire (3) et des sondes de températures, caractérisée en ce que l'enveloppe dans laquelle est monté le dispositif (13) de conduite d'air vers le psychromètre (4) est constituée par le mât (12) solidaire du caisson (9).

8. Installation selon les revendications 7 et 8 caractérisée en ce que la circulation d'air est effectuée entre une ouverture (16) ménagée dans le fond (10) du caisson (9) et au moins une ouverture ménagée dans le mât (12).

9. Installation selon les revendications 3 et 4 caractérisée en ce que les entrées d'air (19) sont à double paroi et que la sonde de température (21) est montée sur la paroi intérieure de la dite entrée.

10. Installation selon les revendication 1 et 8 caractérisée en ce que le fond (10) du caisson est doté d'un canal (15) doté d'au moins une pente convergente vers l'ouverture (16).

11. Installation selon la revendication 1 caractérisée en ce que dans le caisson (9) est monté le pluviomètre (6).

12. Installation selon la revendication 1 caractérisée en ce que dans le caisson (9) est montée l'unité (7) de commandes et de calculs.

13. Installation selon la revendication 1 caractérisée en ce que la partie postérieure du psychromètre (4) est pourvue d'un tuyau souple (17) rejetant l'air aspiré vers l'extérieur du caisson par l'ouverture (16) de celui-ci.

14. Installation selon la revendication 1 caractérisée en ce que la surface autour de l'entonnoir du pluviomètre ainsi que son épaisseur sont calculées en sorte que l'eau de pluie qui vient frapper cette surface puisse par rebondissement être introduite en partie ou en totalité dans l'entonnoir afin de compenser le manque de précision du pluviomètre.

Fig 1

Fig 2

Fig 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 568 372 (S.A.R.L. INDUSTRIELLE FRANCAISE DE MECANIQUE ET D'ELECTRONIQUE FLAMBEAU et al.)<br>* Figures; revendications * | 1-3 | G 01 W   1/02 |
| A | SIEMENS POWER ENGINEERING, vol. 11, no. 3, mars 1980, pages 72-74; L. JAEGER: "Process computers in microclimatology"<br>* En entier * | 1-3 | |

**DOMAINES TECHNIQUES RECHERCHES (Int. Cl.5)**

G 01 W

Le présent rapport a été établi pour toutes les revendications

| Lieu de la recherche | Date d'achèvement de la recherche | Examinateur |
|---|---|---|
| LA HAYE | 09-11-1990 | BATTESON A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)